# FASCICULE DE BREVET EUROPEEN

(11) **EP 1 866 891 B1**
(45) Date de publication et mention de la délivrance du brevet: **09.07.2008**
(21) Numéro de dépôt: 06743622.0
(22) Date de dépôt: 30.03.2006
(51) Int. Cl.: G08G 5/06, G01C 23/00

(54) **SYSTEME D'AIDE A LA NAVIGATION AU SOL D'UN AVION SUR UN AEROPORT**
SYSTEM ZUM UNTERSTÜTZEN DER BODENNAVIGATION EINES FLUGZEUGS AUF EINEM FLUGHAFEN
SYSTEM FOR ASSISTING THE GROUND NAVIGATION OF AN AEROPLANE IN AN AIRPORT

(30) Priorité: 04.04.2005 FR 0503270
(43) Date de publication de la demande: 19.12.2007
(73) Titulaire: AIRBUS France, 31060 Toulouse Cédex (FR)
(72) Inventeur: FETZMANN, Fabien, F-31270 Cugnaux (FR); COLDEFY, Pierre, F-31300 Toulouse (FR); JACOB, Armand, F-31820 Pibrac (FR); COLLINS, Stéphane, F-31000Toulouse (FR)
(74) Mandataire: Hauer, Bernard
(86) Numéro de dépôt international: PCT/FR2006/000690
(87) Numéro de publication internationale: WO 2006/106211

(56) Documents cités:
- EP-A- 1 091 190
- FR-A- 2 854 129
- KAMINENI S ET AL: "Electronic moving map of airport surface on electronic flight bag" DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, vol. 1, 24 octobre 2004 (2004-10-24), pages 4C3-41, XP010764988 ISBN: 0-7803-8539-X
- ROEFS F D ET AL: "Integrating routing in surface guidance displays" DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, 24 octobre 2004 (2004-10-24), pages 4C5-41, XP010764990 ISBN: 0-7803-8539-X

## Description

La présente invention concerne un système d'aide à la navigation au sol d'un avion sur un aéroport.

Bien que non exclusivement, la présente invention s'applique plus particulièrement à un système qui comporte un écran de visualisation cockpit, par exemple :
- de type ND ("Navigation Display" en anglais), c'est-à-dire un écran de navigation qui est utilisé de façon usuelle pour présenter en vol le tracé de la route désirée pour l'avion, c'est-à-dire qui fournit une représentation graphique du plan de vol de l'avion et de la situation de l'avion sur ce plan de vol; ou
- de type OIT ("Onboard Information Terminal" en anglais), c'est-à-dire un écran d'informations embarqué qui est multifonction et qui est notamment utilisé pour afficher de la documentation électronique de l'avion.

Dans le cadre de la présente invention, le système d'aide à la navigation aéroportuaire est du type comportant :
- au moins un moyen pour déterminer la position actuelle de l'avion ;
- au moins une base de données cartographiques de l'aéroport sur lequel se trouve ledit avion ; et
- un dispositif d'affichage comprenant au moins un écran de visualisation cockpit qui est susceptible d'afficher un mode d'affichage au moins d'un premier type, pour lequel ledit écran de visualisation cockpit présente au moins :
   **·** un symbole avion qui illustre ladite position actuelle de l'avion et qui est fixe à une position centrée prédéterminée ; et
   **.** une partie d'une carte qui représente au moins partiellement l'aéroport sur lequel se trouve ledit avion. Ladite partie de carte est mobile et solidaire du mouvement de l'avion de manière à se déplacer par rapport audit symbole avion fixe en conformité avec la position actuelle de l'avion sur ledit aéroport, selon un affichage standard.

De façon usuelle, un mode d'affichage du premier type précité peut être un mode usuel dit arc ou un mode usuel dit rose. Un tel système est décrit par example dans EP 1091190.

Généralement, un écran de visualisation cockpit est également susceptible d'afficher un mode d'affichage d'un second type, dit mode plan, pour lequel l'écran de visualisation cockpit présente au moins une partie de carte auxiliaire qui est fixe et un symbole auxiliaire (illustrant la position actuelle de l'avion) qui est mobile. Un tel mode plan permet de plus à un opérateur, en particulier le pilote de l'avion, de déplacer la partie de carte affichée dans la direction et de l'amplitude qu'il désire. Un tel déplacement libre n'est pas possible dans les modes arc et rose, puisque dans ces deux cas l'affichage est maintenu centré sur le symbole avion qui est fixe.

Or, au cours de la navigation aéroportuaire, le pilote est souvent amené à consulter des informations qui sont éloignées de la position actuelle de l'avion, par exemple pour préparer le roulage ou pour anticiper des manoeuvres. Une telle consultation est facilement réalisable en mode plan, puisqu'il suffit dans ce cas au pilote de déplacer la carte pour afficher la partie de l'aéroport qui l'intéresse.

En revanche, en mode arc et en mode rose, si le pilote doit consulter une information qui est située à une distance de l'avion supérieure à celle affichée conformément à l'échelle sélectionnée du mode d'affichage, il doit :
- soit modifier cette échelle pour afficher une zone plus importante de l'aéroport, ce qui lui fait toutefois perdre des informations importantes puisque le niveau de détails affiché est fonction de l'échelle sélectionnée ;
- soit passer en mode plan pour réaliser la consultation, ce qui n'est toutefois ni recommandé ni acceptable lors de la navigation aéroportuaire, puisque l'affichage n'est alors plus centré sur l'avion de sorte que le système ne remplit plus suffisamment sa fonction principale d'aide à la navigation.

La présente invention concerne un système d'aide à la navigation au sol d'un avion sur un aéroport, qui permet de remédier aux inconvénients précités.

A cet effet, selon l'invention, ledit système du type comportant:
- au moins un moyen pour déterminer la position actuelle de l'avion ;
- au moins une base de données cartographiques au moins de l'aéroport sur lequel se trouve ledit avion ; et
- un dispositif d'affichage comprenant au moins un écran de visualisation cockpit qui est susceptible d'afficher un mode d'affichage au moins d'un premier type, pour lequel ledit écran de visualisation cockpit présente un ensemble d'indications de navigation comprenant au moins :
   · un symbole avion qui illustre ladite position actuelle de l'avion ; et
   · une partie d'une carte qui représente au moins partiellement l'aéroport, ladite partie de carte étant mobile et toujours solidaire du mouvement de l'avion de manière à se déplacer par rapport audit symbole avion en conformité avec la position actuelle de l'avion sur ledit aéroport,
   ledit symbole avion étant fixe sur ledit écran de visualisation cockpit à une position centrée prédéterminée dans un affichage standard,
est remarquable en ce que ledit système comporte de plus :
- des premiers moyens d'actionnement qui sont susceptibles d'être actionnés par un opérateur, pour désactiver ledit affichage standard de manière à permettre un déplacement dudit symbole avion sur ledit écran de visualisation cockpit ; et
- des deuxièmes moyens d'actionnement qui sont susceptibles d'être actionnés par un opérateur, pour commander, lorsque lesdits premiers moyens d'actionnement sont actionnés, un déplacement temporaire dudit ensemble d'indications de navigation sur ledit écran de visualisation cockpit de sorte que le symbole avion affiché n'est alors plus situé à ladite position centrée,
un relâchement desdits premiers moyens d'actionnement provoquant automatiquement un retour audit affichage standard.

Ainsi, grâce à l'invention, un opérateur, en particulier un pilote de l'avion, est en mesure de déplacer ledit ensemble d'indications de navigation affiché (comprenant notamment ladite partie de carte affichée et ledit symbole avion), en particulier pour chercher des informations situées initialement hors du champ d'affichage, et ceci dans un mode d'affichage du premier type précité pour lequel l'affichage (affichage standard) est en principe centré sur le symbole avion qui est en principe fixe. Un tel mode d'affichage du premier type est très efficace pour aider le pilote lors de la navigation aéroportuaire, puisqu'il fournit des informations relatives aux éléments situés tout autour (mode rose) ou tout au moins à l'avant (mode arc) de l'avion.

De plus, le déplacement commandé par l'opérateur est un déplacement uniquement temporaire. En effet, dès le relâchement des premiers moyens d'actionnement, le dispositif d'affichage revient automatiquement à l'affichage standard de sorte que dès la fin d'une action de déplacement de l'ensemble d'indications de navigation (c'est-à-dire de consultation d'information), le pilote dispose d'un affichage (standard) qui est centré sur le symbole avion, comme précisé ci-dessous et qui est donc adapté à la navigation aéroportuaire.

Par conséquent, le système conforme à l'invention permet à la fois de fournir au pilote les informations usuelles nécessaires à la navigation aéroportuaire et de rendre possible une recherche d'informations (temporaire) sur une partie de l'aéroport non affichée, ce qui permet de remédier aux inconvénients précités.

Dans un mode de réalisation particulier, ledit dispositif d'affichage est formé de manière à pouvoir afficher séparément et successivement une pluralité de modes d'affichage différents, et ledit système comporte, de plus, des troisièmes moyens d'actionnement susceptibles d'être actionnés par un opérateur pour changer de mode d'affichage.

Selon l'invention, ledit dispositif d'affichage est formé de manière à pouvoir afficher, comme mode d'affichage du premier type :
- un mode dit arc, pour lequel ledit symbole avion fixe (c'est-à-dire ladite position centrée précitée) est situé au bas de l'écran de visualisation cockpit, plusieurs arcs de cercle étant centrés sur ledit symbole avion ; ou
- un mode dit rose, pour lequel ledit symbole avion fixe (c'est-à-dire ladite position centrée précitée) est situé au centre de l'écran de visualisation cockpit, plusieurs cercles étant centrés sur ledit symbole avion.

En outre, dans un mode de réalisation particulier, ledit dispositif d'affichage est formé de manière à pouvoir afficher de plus un mode d'affichage d'un second type, notamment un mode dit mode plan, pour lequel l'écran de visualisation cockpit présente au moins une partie de carte auxiliaire qui est fixe et un symbole avion auxiliaire qui illustre la position actuelle de l'avion et qui est mobile.

Par ailleurs, dans un mode de réalisation préféré, lesdits premiers et deuxièmes moyens d'actionnement font partie d'une unité d'actionnement.

Dans ce cas, avantageusement, ladite unité d'actionnement peut comporter :
- une souris de commande d'un curseur de l'écran de visualisation cockpit ; et/ou
- un clavier qui comprend des touches munies de flèches de déplacement correspondant auxdits deuxièmes moyens d'actionnement ; et/ou
- un clavier comprenant des touches alphanumériques ; et/ou
- des zones sensibles tactilement dudit écran de visualisation cockpit.

En outre, dans un mode de réalisation particulier, ladite unité d'actionnement est formée de manière à permettre également le déplacement d'un ensemble d'indications de navigation lorsque le dispositif d'affichage affiche un mode d'affichage d'un second type, pour lequel l'écran de visualisation cockpit présente, comme ensemble d'indications de navigation, au moins une partie de carte auxiliaire qui est fixe et un symbole avion auxiliaire qui illustre la position actuelle de l'avion et qui est mobile.

Par ailleurs, avantageusement, le système conforme à l'invention comporte, de plus, un moyen de commande qui est déclenché automatiquement lorsque lesdits premiers moyens d'actionnement sont actionnés et qui commande automatiquement un retour à un affichage standard si lesdits deuxièmes moyens d'actionnement ne sont pas actionnés pendant une durée prédéterminée après le déclenchement dudit moyen de commande. Cette durée prédéterminée est une durée T1, par exemple 5 secondes, que les premiers moyens d'actionnement de type KCCU (ou "trackball") utilisent avant de faire passer la valeur d'un booléen usuel "CCD KEYLCK" de 0 à 1. Cela signifie que si l'opérateur actionne les premiers moyens d'actionnement (clic KCCU) sans actionner les deuxièmes moyens d'actionnement (mouvement boule) avant la fin de la durée T1, on retourne à l'affichage standard. On peut également prévoir un retour à un affichage standard, si les premiers moyens d'actionnement ne sont toujours pas relâchés au bout d'une durée prédéterminée T2, par exemple 30 secondes, dont le décompte commence à l'actionnement desdits deuxièmes moyens d'actionnement.

Les figures du dessin annexé feront bien comprendre comment l'invention peut être réalisée. Sur ces figures, des références identiques désignent des éléments semblables.

La figure 1 est le schéma synoptique d'un système conforme à l'invention.

La figure 2 montre schématiquement un écran de visualisation cockpit affichant un mode d'affichage de type arc, associé à un affichage standard.

La figure 3 montre le même écran de visualisation cockpit que la figure 2, suite à un déplacement temporaire de la partie de carte affichée, conformément à la présente invention.

La figure 4 montre schématiquement un écran de visualisation cockpit affichant un mode d'affichage de type rose, associé à un affichage standard.

La figure 5 montre le même écran de visualisation cockpit que la figure 4, suite à un déplacement temporaire de la partie de carte affichée, conformément à la présente invention.

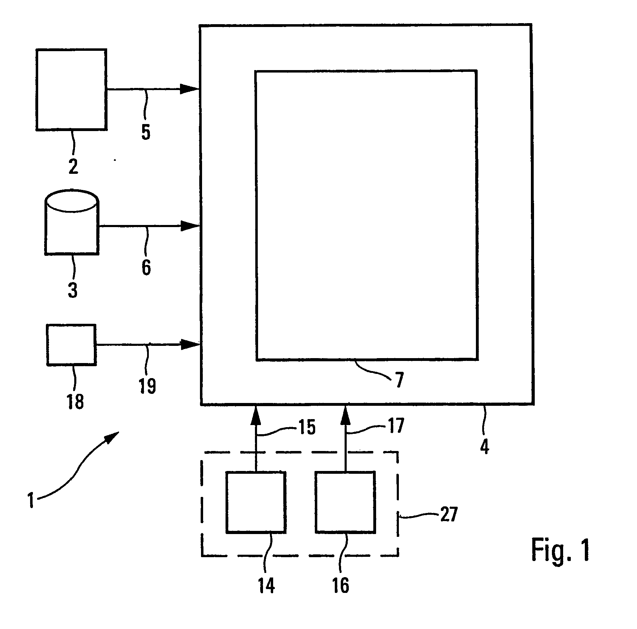

Le système 1 conforme à l'invention et représenté schématiquement sur la figure 1 est destiné à aider un pilote d'un avion, en particulier d'un avion de transport, lors de la navigation (roulement) au sol dudit avion sur un aéroport.

Pour ce faire, ledit système 1 comporte:
- un moyen 2 pour déterminer, de façon usuelle, au moins la position actuelle de l'avion sur l'aéroport ;
- une base de données 3 qui comporte des données cartographiques de type numérique au moins dudit aéroport, sur lequel se trouve ledit avion ; et
- un dispositif d'affichage 4 qui est relié par l'intermédiaire de liaisons 5 et 6 respectivement audit moyen 2 et à ladite base de données 3 et qui comprend au moins un écran de visualisation cockpit 7.

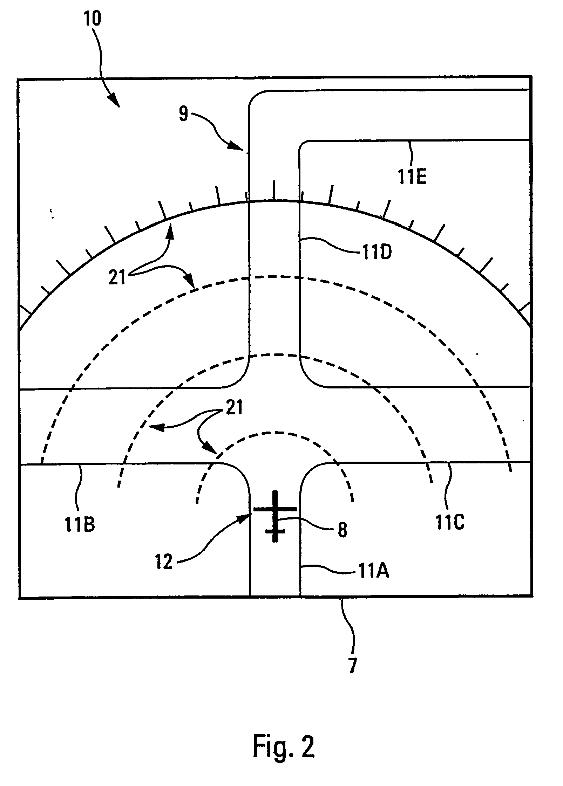

Cet écran de visualisation cockpit 7 est susceptible d'afficher un mode d'affichage au moins d'un premier type, pour lequel ledit écran de visualisation cockpit 7 présente un ensemble d'indications de navigation 10 comprenant au moins, comme représenté sur les figures 2 à 4 :
- un symbole avion 8 qui illustre la position actuelle de l'avion, qui est reçue dudit moyen 2 ; et
- une partie d'une carte 9 qui représente au moins partiellement l'aéroport. Ladite partie de carte 9 montre des éléments de l'aéroport, en particulier des voies de roulement 11A, 11B, 11C, 11D, 11E telles que des pistes d'atterrissage, des taxiways ou des bretelles d'accès par exemple. Cette partie de carte 9 est mobile sur l'écran de visualisation cockpit 7 et est toujours solidaire du mouvement de l'avion de manière à se déplacer par rapport audit symbole avion 8 en conformité avec la position actuelle effective de l'avion sur ledit aéroport.

Par ailleurs, selon un affichage standard, ledit symbole avion 8 est fixe à une position centrée 12, 13 prédéterminée, précisée ci-dessous. La partie de carte 9 mobile se déplace donc par rapport audit symbole avion 8 fixe.

Selon l'invention, ledit système 1 comporte de plus :
- des moyens d'actionnement 14 précisés ci-dessous, qui sont reliés par l'intermédiaire d'une liaison 15 audit dispositif d'affichage 4 et qui sont susceptibles d'être actionnés par un opérateur, en particulier le pilote de l'avion, pour désactiver ledit affichage standard de manière à permettre un déplacement dudit symbole avion 8 sur ledit écran de visualisation cockpit 7 ; et
- des moyens d'actionnement 16 également précisés ci-dessous, qui sont reliés par l'intermédiaire d'une liaison 17 audit dispositif d'affichage 4, et qui sont susceptibles d'être actionnés par l'opérateur, pour commander, lorsque lesdits moyens d'actionnement 14 ont été préalablement actionnés, un déplacement temporaire dudit ensemble d'indications de navigation 10 sur ledit écran de visualisation cockpit 7 de sorte que le symbole avion 8 n'est alors plus situé à ladite position centrée 12, 13. Lors d'un tel déplacement, le symbole avion 8 se déplace de façon solidaire avec ladite partie de carte 9 de manière à être en conformité avec la position actuelle effective de l'avion sur ledit aéroport.

Ce déplacement est uniquement temporaire. En effet, tout relâchement desdits moyens d'actionnement 14, c'est-à-dire tout arrêt de leur actionnement, entraîne automatiquement un retour audit affichage standard précité, pour lequel le symbole avion 8 est fixe à ladite position centrée 12, 13.

Ainsi, grâce au système 1 conforme à l'invention, un opérateur, en particulier un pilote de l'avion, est en mesure de déplacer l'ensemble d'indications de navigation 10 affiché (comprenant notamment ladite partie de carte 9 et ledit symbole avion 8), en particulier pour chercher des informations situées initialement hors du champ d'affichage dudit écran de visualisation cockpit 7, et ceci dans un mode d'affichage dudit premier type pour lequel l'affichage (affichage standard précité) est en principe centré sur le symbole avion 8 qui est en principe fixe. Un tel mode d'affichage du premier type est très efficace pour aider le pilote lors de la navigation aéroportuaire, puisqu'il fournit les informations situées à proximité de la position actuelle de l'avion, comme précisé ci-dessous.

De plus, le déplacement commandé par l'opérateur est un déplacement temporaire, puisque, dès le relâchement des moyens d'actionnement 14, le dispositif d'affichage 4 revient automatiquement à l'affichage standard de sorte que dès la fin d'une action de déplacement de l'ensemble 10 (c'est-à-dire de consultation d'information), le pilote dispose d'un affichage (standard) qui est centré sur le symbole avion 8 fixe (à la position centrée 12, 13 correspondante).

Par conséquent, le système 1 conforme à l'invention permet à la fois :
- de fournir au pilote les informations usuelles nécessaires à la navigation aéroportuaire (affichage standard) ; et
- de rendre possible une recherche d'information (temporaire) sur une partie de l'aéroport non affichée (déplacement de l'ensemble 10).

En outre, le déplacement commandé par l'opérateur est de préférence un déplacement continu, notamment pour des raisons de confort de la surveillance visuelle de l'écran de visualisation cockpit 7 par l'opérateur.

Dans un mode de réalisation particulier, ledit dispositif d'affichage 4 est formé de manière à pouvoir afficher séparément et successivement une pluralité de modes d'affichage différents, et ledit système 1 comporte, de plus, des moyens d'actionnement 18 usuels, qui sont reliés par l'intermédiaire d'une liaison 19 audit dispositif d'affichage 4 et qui sont susceptibles d'être actionnés par un opérateur pour changer de mode d'affichage.

Selon l'invention, ledit dispositif d'affichage 4 est formé de manière à pouvoir afficher, comme mode d'affichage du premier type, notamment un mode usuel dit arc, pour lequel ledit symbole avion 8 présente une position centrée fixe 12 qui est située verticalement au bas et horizontalement au centre de l'écran de visualisation cockpit 7, comme représenté sur la figure 2. Ce symbole avion 8 est orienté vers le haut. De plus, ce symbole avion 8 est situé au centre de plusieurs arcs de cercle 21, qui définissent de façon usuelle une échelle de cap et une échelle de distance. La figure 2 correspond donc à un affichage standard usuel relatif à un mode arc.

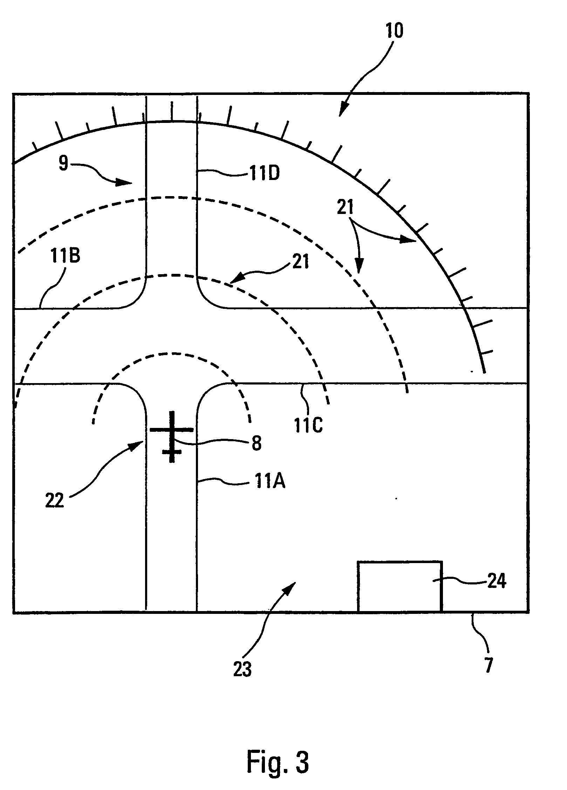

Quant à la figure 3, elle illustre un déplacement commandé de l'ensemble d'indications de navigation 10 conformément à la présente invention, à partir de l'affichage standard de la figure 2. Dans ce cas, le symbole avion 8 n'est plus fixe et n'est plus situé à la position centrée 12 initiale, mais à une position 22 décalée ou décentrée. Le déplacement de l'ensemble d'indications de navigation 10 permet d'afficher au moins une zone 23 de l'aéroport qui n'était pas affichée selon ledit affichage standard et ainsi de révéler d'autres éléments 24 dudit aéroport, par exemple des bâtiments ou des voies de roulement. Ce déplacement commandé permet donc au pilote de réaliser une consultation d'informations sur une partie d'aéroport (zone 23) initialement non affichée.

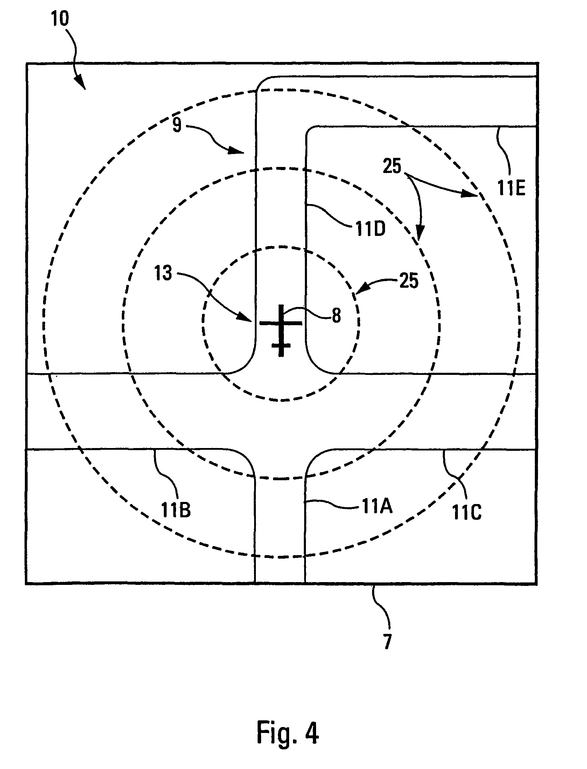

En outre, le dispositif d'affichage 4 est également formé de manière à pouvoir afficher, comme mode d'affichage du premier type, un mode dit rose qui est représenté sur la figure 4, et pour lequel le symbole avion 8 est fixe et se trouve au centre (position 13) de l'écran de visualisation cockpit 7. Ce symbole avion 8 est orienté vers le haut. Plusieurs cercles 25 qui sont concentriques audit symbole avion 8 fournissent des échelles de référence pour mesurer rapidement et visuellement les distances et le cap. Selon l'affichage standard, la partie de carte 9 est mobile et solidaire du mouvement de l'avion de manière à se déplacer par rapport audit symbole avion 8 fixe en conformité avec la position actuelle de l'avion sur l'aéroport.

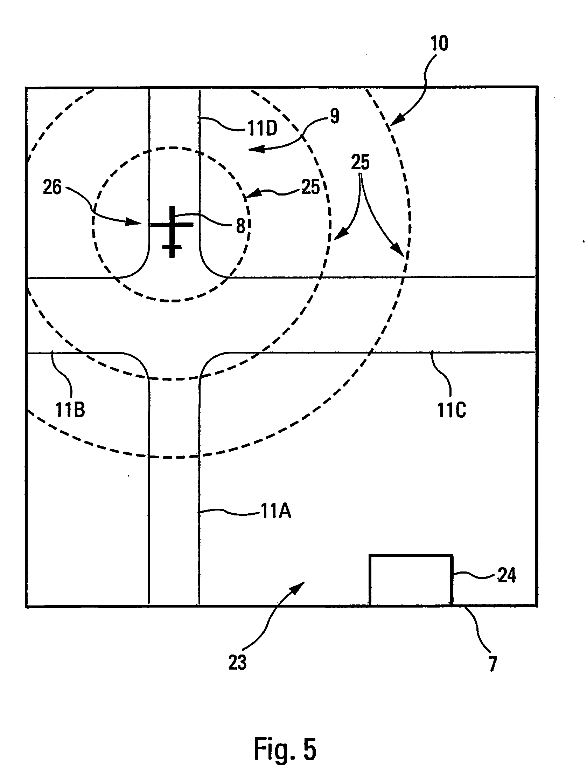

Comme indiqué précédemment, grâce au système 1 conforme à l'invention, le pilote peut désactiver ledit affichage standard de manière à permettre un déplacement temporaire dudit ensemble d'indications de navigation 10 sur ledit écran de visualisation cockpit 7 de sorte que le symbole avion 8 affiché n'est alors plus situé à ladite position centrée (position centrale 13) mais à une position 26 décentrée ou décalée, comme représenté sur la figure 5.

Un tel déplacement permet donc d'afficher au moins une zone 23 de l'aéroport initialement non affichée et comprenant de nouveaux éléments 24.

Par ailleurs, dans un mode de réalisation préféré, lesdits moyens d'actionnement 14 et 16 font partie d'une unité d'actionnement 27.

Dans le cadre de la présente invention, ladite unité d'actionnement 27 peut comporter notamment :
- une souris usuelle de commande d'un curseur de l'écran de visualisation cockpit 7 ; et/ou
- un clavier usuel qui comprend des touches alphanumériques ; et/ou
- un clavier usuel qui comprend notamment des touches munies de flèches de déplacement. Ces flèches de déplacement correspondent auxdits moyens d'actionnement 16. Dans ce cas, on peut prévoir par exemple que l'actionnement :
   . d'une flèche dirigée vers le haut, entraîne un déplacement de l'ensemble d'indications de navigation 10 vers le bas ;
   · d'une flèche dirigée vers le bas, entraîne un déplacement de l'ensemble d'indications de navigation 10 vers le haut ;
   . d'une flèche dirigée vers la droite, entraîne un déplacement de l'ensemble d'indications de navigation 10 vers la gauche ;
   . d'une flèche dirigée vers la gauche, entraîne un déplacement de l'ensemble d'indications de navigation 10 vers la droite ;
   De plus, on peut prévoir que chaque actionnement d'une flèche provoque un déplacement (dans la direction correspondante) selon une distance prédéterminée, par exemple selon la moitié de la longueur ou la moitié de la largeur de l'écran de visualisation cockpit 7 en fonction de la flèche (verticale ou horizontale) actionnée ; et/ou
- une surface ou des zones sensibles tactilement dudit écran de visualisation cockpit 7. Dans ce cas, pour désactiver l'affichage standard, il suffit de toucher ledit écran de visualisation cockpit 7 tactile (ce qui représente lesdits moyens d'actionnement 14), par exemple avec un doigt ou un moyen usuel approprié, et pour engendrer un déplacement de l'ensemble 10, il convient simplement de déplacer ledit élément (doigt, moyen approprié) qui est en contact avec ledit écran de visualisation cockpit 7.

Par ailleurs, ledit dispositif d'affichage 4 est formé de manière à pouvoir afficher un mode d'affichage d'un second type, dit mode plan (non représenté), pour lequel l'écran de visualisation cockpit 7 présente au moins :
- une partie de carte auxiliaire qui est fixe ; et
- un symbole avion auxiliaire qui illustre la position actuelle de l'avion et qui est mobile sur ladite partie de carte auxiliaire fixe.

Dans ce cas, dans un mode de réalisation préféré, ladite unité d'actionnement 27 est également formée de manière à permettre le déplacement par un opérateur de l'ensemble d'indications de navigation 10, lorsque le dispositif d'affichage 4 affiche un tel mode plan.

Par ailleurs, le système 1 conforme à l'invention comporte, de plus, un moyen de commande (non représenté) qui est déclenché automatiquement lorsque lesdits moyens d'actionnement 14 sont actionnés et qui commande automatiquement un retour à un affichage standard si lesdits moyens d'actionnement 16 n'ont pas été actionnés au terme d'une durée prédéterminée, après le déclenchement dudit moyen de commande. Cette durée prédéterminée est une durée T1, par exemple 5 secondes, que les moyens d'actionnement 14 par exemple de type KCCU (ou "trackball") utilisent avant de faire passer la valeur d'un booléen usuel "CCD KEYLCK" de 0 à 1. Cela signifie que si l'opérateur actionne les moyens d'actionnement 14 (clic KCCU) sans actionner les moyens d'actionnement 16 (mouvement boule) avant la fin de la durée T1, on retourne à l'affichage standard. On peut également prévoir un retour à un affichage standard, si les moyens d'actionnement 14 ne sont toujours pas relâchés au bout d'une durée prédéterminée T2, par exemple 30 secondes, dont le décompte commence après avoir actionné les moyens d'actionnement 16.

## Revendications

1. Système d'aide à la navigation au sol d'un avion sur un aéroport, ledit système (1) comportant :
- au moins un moyen (2) pour déterminer la position actuelle de l'avion
- au moins une base de données cartographiques (3) au moins de l'aéroport sur lequel se trouve ledit avion;
- un dispositif d'affichage (4) comprenant au moins un écran de visualisation cockpit (7) qui est susceptible d'afficher un mode d'affichage au moins d'un premier type, pour lequel ledit écran de visualisation cockpit (7) présente un ensemble d'indications de navigation (10) comprenant au moins:
■ un symbole avion (8) qui illustre ladite position actuelle de l'avion; et
■ une partie d'une carte (9) qui représente au moins partiellement l'aéroport, ladite partie de carte (9) étant mobile et toujours solidaire du mouvement de l'avion de manière à se déplacer par rapport audit symbole avion (8) en conformité avec la position actuelle de l'avion sur ledit aéroport,
ledit symbole avion (8) étant fixe sur ledit écran de visualisation cockpit (7) à une position centrée (12, 13) prédéterminée dans un affichage standard, et
- des premiers moyens d'actionnement (14) qui sont susceptibles d'être actionnés par un opérateur, pour désactiver ledit affichage standard de manière à permettre un déplacement dudit symbole avion (8) sur ledit écran de visualisation cockpit (7) ;
**caractérisé en ce que** ledit système (1) comporte de plus:
- des deuxièmes moyens d'actionnement (16) qui sont susceptibles d'être actionnés par un opérateur, pour commander, lorsque lesdits premiers moyens d'actionnement (14) sont actionnés, un déplacement temporaire dudit ensemble d'indications de navigation (10) sur ledit écran de visualisation cockpit (7) de sorte que le symbole avion (8) affiché n'est alors plus situé à ladite position centrée (12, 13),
un relâchement automatique desdits premiers moyens d'actionnement (14) provoquant automatiquement un retour audit affichage standard.

2. Système selon la revendication 1,
**caractérisé en ce que** ledit dispositif d'affichage (4) est formé de manière à pouvoir afficher séparément et successivement une pluralité de modes d'affichage différents, et **en ce que** ledit système (1) comporte, de plus, des troisièmes moyens d'actionnement (18) susceptibles d'être actionnés par un opérateur pour changer de mode d'affichage.

3. Système selon l'une des revendications 1 et 2,
**caractérisé en ce que** ledit dispositif d'affichage (4) est formé de manière à pouvoir afficher, comme mode d'affichage du premier type, un mode dit arc pour lequel ledit symbole avion (8) fixe est situé au bas de l'écran de visualisation cockpit (7), plusieurs arcs de cercle (21) étant centrés sur ledit symbole avion (8).

4. Système selon l'une des revendications 1 et 2,
**caractérisé en ce que** ledit dispositif d'affichage (4) est formé de manière à pouvoir afficher, comme mode d'affichage du premier type, un mode dit rose pour lequel ledit symbole avion (8) fixe est situé au centre de l'écran de visualisation cockpit (7), plusieurs cercles (25) étant centrés sur ledit symbole avion (8).

5. Système selon l'une des revendications 1 et 2,
**caractérisé en ce que** ledit dispositif d'affichage (4) est formé de manière à pouvoir afficher un mode d'affichage d'un second type, dit mode plan, pour lequel l'écran de visualisation cockpit (7) présente au moins une partie de carte auxiliaire qui est fixe et un symbole avion auxiliaire qui illustre la position actuelle de l'avion et qui est mobile.

6. Système selon l'une quelconque des revendications 1 à 5,
**caractérisé en ce que** lesdits premiers et deuxièmes moyens d'actionnement (14, 16) font partie d'une unité d'actionnement (27).

7. Système selon la revendication 6,
**caractérisé en ce que** ladite unité d'actionnement (27) comporte une souris de commande d'un curseur de l'écran de visualisation cockpit.

8. Système selon l'une des revendications 6 et 7,
**caractérisé en ce que** ladite unité d'actionnement (27) comporte un clavier qui comprend des touches munies de flèches de déplacement correspondant auxdits deuxièmes moyens d'actionnement (16).

9. Système selon l'une quelconque des revendications 6 à 8,
**caractérisé en ce que** ladite unité d'actionnement (27) comporte un clavier comprenant des touches alphanumériques.

10. Système selon l'une quelconque des revendications 6 à 9,
**caractérisé en ce que** ladite unité d'actionnement (27) comporte des zones sensibles tactilement dudit écran de visualisation cockpit (7).

11. Système selon l'une quelconque des revendications 6 à 10,
**caractérisé en ce que** ladite unité d'actionnement (27) est formée de manière à permettre également le déplacement d'un ensemble d'indications de navigation lorsque le dispositif d'affichage (4) affiche un mode d'affichage d'un second type, pour lequel l'écran de visualisation cockpit (7) présente, comme ensemble d'indications de navigation, au moins une partie de carte auxiliaire qui est fixe et un symbole avion auxiliaire qui illustre la position actuelle de l'avion et qui est mobile.

12. Système selon l'une quelconque des revendications précédentes,
**caractérisé en ce qu'**il comporte, de plus, un moyen de commande qui .est déclenché automatiquement lorsque lesdits premiers moyens d'actionnement (14) sont actionnés et qui commande automatiquement un retour à un affichage standard si lesdits deuxièmes moyens d'actionnement (16) ne sont pas actionnés pendant une première durée prédéterminée après le déclenchement dudit moyen de commande.

13. Système selon l'une quelconque des revendications précédentes,
**caractérisé en ce qu'**il est formé pour commander automatiquement un retour à un affichage standard, si après un actionnement desdits deuxièmes moyens d'actionnement (16), lesdits premiers moyens d'actionnement (14) ne sont pas relâchés au bout d'une seconde durée prédéterminée.

14. Avion,
**caractérisé en ce qu'**il comporte un système (1) tel que celui spécifié sous l'une quelconque des revendications 1 à 13.

## Claims

1. A system for assisting the ground navigation of an airplane in an airport, said system (1) comprising:
- at least one means (2) for determining the current position of the airplane;
- at least one cartographic database (3) at least of the airport in which said airplane is situated;
- a display device (4) comprising at least one cockpit viewing screen (7) which is capable of displaying a display mode at least of a first type, for which said cockpit viewing screen (7) presents a set of navigation indications (10) comprising at least:
· an airplane symbol (8) which illustrates said current position of the airplane; and
· a part of a map (9) which represents at least partially the airport, said map part (9) being mobile and always tied to the motion of the airplane so as to move with respect to said airplane symbol (8) in conformity with the current position of the airplane in said airport,
said airplane symbol (8) being fixed on said cockpit viewing screen (7) at a predetermined centered position (12, 13) in a standard display, and
- first actuation means (14) which are capable of being actuated by an operator, so as to deactivate said standard display in such a way as to allow a movement of said airplane symbol (8) on said cockpit viewing screen (7);
**characterized in that** said system (1) moreover comprises:
- second actuation means (16) which are capable of being actuated by an operator, so as to control, when said first actuation means (14) are actuated, a temporary movement of said set of navigation indications (10) on said cockpit viewing screen (7) so that the displayed airplane symbol (8) is then no longer situated at said centered position (12, 13), an automatic relaxation of said first actuation means (14) automatically causing a return to said standard display.

2. The system as claimed in claim 1, **characterized in that** said display device (4) is formed so as to be able to display separately and successively a plurality of different display modes, and **in that** said system (1) comprises, moreover, third actuation means (18) capable of being actuated by an operator so as to change display mode.

3. The system as claimed in one of claims 1 and 2, **characterized in that** said display device (4) is formed so as to be able to display, as display mode of the first type, a mode termed arc for which said fixed airplane symbol (8) is situated at the bottom of the cockpit viewing screen (7), several circular arcs (21) being centered on said airplane symbol (8).

4. The system as claimed in one of claims 1 and 2, **characterized in that** said display device (4) is formed so as to be able to display, as display mode of the first type, a mode termed rose for which said fixed airplane symbol (8) is situated at the center of the cockpit viewing screen (7), several circles (25) being centered on said airplane symbol (8).

5. The system as claimed in one of claims 1 and 2, **characterized in that** said display device (4) is formed so as to be able to display a display mode of a second type, termed plan mode, for which the cockpit viewing screen (7) presents at least one auxiliary map part which is fixed and an auxiliary airplane symbol which illustrates the current position of the airplane and which is mobile.

6. The system as claimed in any one of claims 1 to 5, **characterized in that** said first and second actuation means (14, 16) form part of an actuation unit (27).

7. The system as claimed in claim 6, **characterized in that** said actuation unit (27) comprises a control mouse of a cursor of the cockpit viewing screen.

8. The system as claimed in one of claims 6 and 7, **characterized in that** said actuation unit (27) comprises a keyboard which comprises keys furnished with movement arrows corresponding to said second actuation means (16).

9. The system as claimed in any one of claims 6 to 8, **characterized in that** said actuation unit (27) comprises a keyboard comprising alphanumeric keys.

10. The system as claimed in any one of claims 6 to 9, **characterized in that** said actuation unit (27) comprises touch sensitive zones of said cockpit viewing screen (7).

11. The system as claimed in any one of claims 6 to 10,
**characterized in that** said actuation unit (27) is formed so as also to allow the movement of a set of navigation indications when the display device (4) displays a display mode of a second type, for which the cockpit viewing screen (7) presents, as set of navigation indications, at least one auxiliary map part which is fixed and an auxiliary airplane symbol which illustrates the current position of the airplane and which is mobile.

12. The system as claimed in any one of the preceding claims,
**characterized in that** it comprises, moreover, a control means which is automatically triggered when said first actuation means (14) are actuated and which automatically controls a return to a standard display if said second actuation means (16) are not actuated during a first predetermined duration after the triggering of said control means.

13. The system as claimed in any one of the preceding claims,
**characterized in that** it is formed so as automatically to control a return to a standard display, if after an actuation of said second actuation means (16), said first actuation means (14) are not relaxed after a second predetermined duration.

14. An airplane,
**characterized in that** it comprises a system (1) such as that specified under any one of claims 1 to 13.

## Patentansprüche

1. System zum Unterstützen der Bodennavigation eines Flugzeugs auf einem Flughafen, wobei das System (1) umfasst:
- mindestens ein Mittel (2) zum Bestimmen der aktuellen Position des Flugzeugs;
- mindestens eine Kartendatenbank (3) zumindest des Flughafens, auf dem sich das Flugzeug befindet;
- eine Anzeigeeinrichtung (4), zumindest einen Cockpit-Anzeigebildschirm (7) umfassend, der geeignet ist, einen Anzeigemodus mindestens einer ersten Art anzuzeigen, bei dem der Cockpit-Anzeigebildschirm (7) einen Satz von Navigationshinweisen (10) aufweist, der mindestens umfasst:
• ein Flugzeugsymbol (8) das die aktuelle Position des Flugzeugs darstellt und
• einen Teil einer Karte (9), die zumindest teilweise den Flughafen darstellt, wobei der Teil der Karte (9) beweglich und stets derart mit der Bewegung des Flugzeugs verbunden ist, dass er sich relativ zum Flugzeugsymbol (8) in Übereinstimmung mit der aktuellen Position des Flugzeugs auf dem Flughafen verschiebt,
wobei das Flugzeugsymbol (8) auf dem Cockpit-Anzeigebildschirm (7) an einer zentrierten Position (12, 13), die in einer Standardanzeige vorgegeben ist, festgelegt ist und
- erste Betätigungsmittel (14), die von einer Bedienperson zur Deaktivierung der Standardanzeige derart betätigbar sind, dass ein Verschieben des Flugzeugsymbols (8) auf dem Cockpit-Anzeigebildschirm (7) möglich wird,
**dadurch gekennzeichnet, dass** das System (1) außerdem umfasst:
- zweite Betätigungsmittel (16) die, wenn die ersten Betätigungsmittel (14) betätigt sind, von einer Bedienperson zur Steuerung einer vorübergehenden Verschiebung des Satzes von Navigationshinweisen (10) auf dem Cockpit-Anzeigebildschirm (7) derart betätigbar sind, dass das angezeigte Flugzeugsymbol (8) nicht mehr in der zentrierten Position (12, 13) angeordnet ist,
wobei eine automatische Freigabe der ersten Betätigungsmittel (14) automatisch ein Zurückschalten in die Standardanzeige bewirkt.

2. System nach Anspruch 1,
**dadurch gekennzeichnet, dass** die Anzeigeeinrichtung (4) derart ausgebildet ist, dass sie unabhängig voneinander und nacheinander eine Vielzahl von unterschiedlichen Anzeigemodi anzeigen kann und dadurch, dass das System (1) außerdem dritte Betätigungsmittel (18) umfasst, die von einer Bedienperson zum Wechseln des Anzeigemodus betätigbar sind.

3. System nach Anspruch 1 oder 2,
**dadurch gekennzeichnet, dass** die Anzeigeeinrichtung (4) derart ausgebildet ist, dass sie als Anzeigemodus der ersten Art einen sogenannten Bogen-Modus anzeigen kann, bei dem das festgelegte Flugzeugsymbol (8) unten auf dem Cockpit-Anzeigebildschirm (7) angeordnet ist und mehrere Kreisbögen (21) mittig zu dem Flugzeugsymbol (8) ausgerichtet sind.

4. System nach Anspruch 1 oder 2,
**dadurch gekennzeichnet, dass** die Anzeigeeinrichtung (4) derart ausgebildet ist, dass sie als Anzeigemodus der ersten Art einen sogenannten Rosetten-Modus anzeigen kann, bei dem das festgelegte Flugzeugsymbol (8) in der Mitte des Cockpit-Anzeigebildschirms (7) angeordnet ist und mehrere Kreise (25) mittig zu dem Flugzeugsymbol (8) ausgerichtet sind.

5. System nach Anspruch 1 oder 2,
**dadurch gekennzeichnet, dass** die Anzeigeeinrichtung (4) derart ausgebildet ist, dass sie einen Anzeigemodus einer zweiten Art, einen sogenannten Plan-Modus, anzeigen kann, bei dem der Cockpit-Anzeigebildschirm (7) mindestens einen ergänzenden Kartenteil, der festgelegt ist und ein ergänzendes Flugzeugsymbol, das die aktuelle Position des Flugzeugs darstellt und beweglich ist, aufweist.

6. System nach einem der Ansprüche 1 bis 5,
**dadurch gekennzeichnet, dass** die ersten und zweiten Betätigungsmittel (14, 16) Teil einer Betätigungseinheit (27) sind.

7. System nach Anspruch 6,
**dadurch gekennzeichnet, dass** die Betätigungseinheit (27) eine Maus für die Steuerung eines Cursors des Cockpit-Anzeigebildschirms umfasst.

8. System nach Anspruch 6 oder 7,
**dadurch gekennzeichnet, dass** die Betätigungseinheit (27) eine Tastatur umfasst, die mit Bewegungspfeilen versehene Tasten, die den zweiten Betätigungsmitteln (16) entsprechen, umfasst.

9. System nach einem der Ansprüche 6 bis 8,
**dadurch gekennzeichnet, dass** die Betätigungseinheit (27) eine Tastatur mit alphanumerischen Tasten umfasst.

10. System nach einem der Ansprüche 6 bis 9,
**dadurch gekennzeichnet, dass** die Betätigungseinheit (27) berührungsempfindliche Bereiche des Cockpit-Anzeigebildschirms (7) umfasst.

11. System nach einem der Ansprüche 6 bis 10,
**dadurch gekennzeichnet, dass** die Betätigungseinheit (27) ausgebildet ist, auch die Bewegung eines Satzes von Navigationshinweisen zu ermöglichen, wenn die Anzeigeeinrichtung (4) einen Anzeigemodus einer zweiten Art anzeigt, bei dem der Cockpit-Anzeigebildschirm (7) als Satz von Navigationshinweisen mindestens einen zusätzlichen festgelegten Kartenteil und ein zusätzliches Flugzeugsymbol darstellt, das die aktuelle Position des Flugzeugs darstellt und beweglich ist.

12. System nach einem der vorhergehenden Ansprüche,
**dadurch gekennzeichnet, dass** es außerdem ein Steuermittel umfasst, das automatisch ausgelöst wird, wenn die ersten Betätigungsmittel (14) betätigt werden und das automatisch ein Zurückschalten in eine Standardanzeige ansteuert, wenn die zweiten Betätigungsmittel (16) während einer ersten vorbestimmten Zeitdauer nach der Auslösung des Steuermittels nicht betätigt werden.

13. System nach einem der vorhergehenden Ansprüche,
**dadurch gekennzeichnet, dass** es für die automatische Ansteuerung eines Zurückschaltens in eine Standardanzeige ausgebildet ist, wenn nach einer Betätigung der zweiten Betätigungsmittel (16) die ersten Betätigungsmittel (14) nicht nach einer zweiten vorbestimmten Zeitdauer freigegeben werden.

14. Flugzeug,
**dadurch gekennzeichnet, dass** es ein System (1), wie das unter einem der Ansprüche 1 bis 13 spezifizierte umfasst.
